# EUROPÄISCHE PATENTSCHRIFT

(11) **EP 2 225 135 B1**
(45) Veröffentlichungstag und Bekanntmachung des Hinweises auf die Patenterteilung: **28.03.2018**
(21) Anmeldenummer: 08804986.1
(22) Anmeldetag: 02.10.2008
(51) Int. Cl.: B60W 20/00, H02H 7/12, H02K 47/12, B60W 50/02, B60W 10/26

(54) **STARTVERFAHREN FÜR HYBRIDANTRIEBE**
STARTING METHOD FOR HYBRID DRIVES
PROCÉDÉ DE DÉMARRAGE POUR SYSTÈMES HYBRIDES DE PROPULSION

(30) Priorität: 06.11.2007 DE 102007052750
(43) Veröffentlichungstag der Anmeldung: 08.09.2010
(73) Patentinhaber: Robert Bosch GmbH, 70442 Stuttgart (DE)
(72) Erfinder: GOLLUB, Dirk, 71701 Schwieberdingen (DE); THULKE, Mirko, 71254 Ditzingen (DE)
(86) Internationale Anmeldenummer: PCT/EP2008/063199
(87) Internationale Veröffentlichungsnummer: WO 2009/059852

(56) Entgegenhaltungen:
- DE-C1- 10 021 155
- DE-C1- 19 846 319
- US-B1- 6 323 608

## Beschreibung

### Stand der Technik

Die Erfindung geht aus von bekannten Startverfahren zum Starten eines Hybridantriebs. Fahrzeuge mit Hybridantrieben umfassen eine Traktionsbatterie, die den E-Motor des Antriebs mit Strom versorgt. Die Traktionsbatterie wird gemäß dem bekannten Hybridverfahren von dem Verbrennungsmotor des Antriebs aufgeladen und weist eine deutlich höhere Betriebsspannung (größer 300 V) als das Bordnetz (12 V, 24 V) des Fahrzeugs auf. Während das Bordnetz von einer Bordnetzbatterie gespeist wird, beispielsweise einem Bleiakkumulator, wie er auch für übliche Verbrennungsmotor-Kraftfahrzeuge vorgesehen ist, und somit nahezu alle Komponenten des Fahrzeugs mit Strom versorgt, dient die Traktionsbatterie lediglich der Stromzufuhr für den Elektromotor. Bis auf den Elektromotor sind alle Komponenten des Fahrzeugs auf die Betriebsspannung des Bordnetzes ausgelegt, wodurch Komponenten von üblichen Verbrennungsmotor-Fahrzeugen verwendet werden können.

Es sind Hybridantriebe bekannt, die einen Gleichstrom/Gleichstrom-Wandler (DC/DC-Wandler) haben, der die Spannung der Traktionsbatterie dazu verwendet, nach Umwandlung der Spannung das Bordnetz zu speisen. Ein derartiger DC/DC-Wandler wird, wie nahezu alle weiteren Komponenten des Antriebs, von dem Bordnetz gespeist. Üblicherweise ist die Wandlersteuerung des DC/DC-Wandlers ein Teil einer Steuerung, die den elektrischen Energiehaushalt in dem Kraftfahrzeug steuert und beispielsweise auch die Lichtmaschine und ähnliches ansteuert. Eine derartige Steuerung ist, wie auch die gesteuerten Komponenten, auf eine Betriebsspannung von 12 V ausgelegt. Neben der unterschiedlichen Leistungsfunktionen zwischen Bordnetzbatterie und Traktionsbatterie ist die lebensgefährlich hohe Spannung der Traktionsbatterie der Grund dafür, dass beide Kreise strickt voneinander getrennt sind.

Daher kann bei bekannten Hybridantrieben der Fall eintreten, dass die Traktionsbatterie zwar ausreichend aufgeladen ist, jedoch keine elektrische Leistung an eine entleerte Bordnetzbatterie bzw. an ein zu unterstützendes Bordnetz übertragen werden kann, weil die Steuerung des DC/DC-Wandlers, der zur Übertragung der Leistung eingerichtet ist, auf Grund der zu geringen Betriebsspannung im Bordnetz nicht aktiviert werden kann. Wie bereits bemerkt ist es hinsichtlich der Isolation und der Konzeption sehr schwierig, die Wandlersteuerung sowie weitere Steuerungselemente im Netz der Traktionsbatterie unterzubringen.

Die Druckschrift DE 41 38 943 C1 beschreibt zwei Speicher, d.h. einen Speicher für ein Bordnetz und einen Startspeicher zur Versorgung eines Starters, um die Auswirkungen des Starters auf dessen Versorgungsnetz von dem Bordnetz zu trennen. Diese Druckschrift betrifft jedoch die Spannungsversorgung eines üblichen Verbrennungsmotorantriebs, der keine Traktionsbatterie, aufweist, die von dem Bordnetz getrennt ist.

Die Druckschrift DE 101 00 889 A1 umfasst ebenfalls die Spannungsversorgung eines Verbrennungsmotorantriebs. Die Druckschrift schlägt vor, zwei Teilversorgungsnetze als Bordnetz zu verwenden, um für den Startvorgang eine Redundanz vorzusehen. Die DruckSchrift beschreibt jedoch ebenso wie die oben genannte Druckschrift keine Schaltungsstruktur, wie sie für einen Hybridmotor typisch ist" und diskutiert keine mit dieser Struktur zusammenhängenden spezifischen Situationen.

Die gattungsbildende Druckschrift DE 100 21 155 C1 beschreibt ein Bordnetz eines Kraftfahrzeugs, dem zwei Fahrzeugbatterien zugeordnet sind. Für den Fall, dass eine zweite der Fahrzeugbatterien leer ist, kann ein Notstartvorgang über eine erste der Fahrzeugbatterien durchgeführt werden. Dabei wird ein Notstartschalter geschlossen, worauf ein Strom von der ersten Fahrzeugbatterie über eine Notstartdiode zu einem Starter geleitet wird. Die US 6,323,608 B1 betrifft eine Hauptbatterie eines Hybridantriebs, die sich dadurch auszeichnet, dass sie als Dual-Spannungsbatterie ausgebildet ist und dazu eine Batterie mit höherer Spannung und eine Batterie mit niedrigerer Spannung umfasst. Zwischen der Batterie mit der niedrigeren Spannung und einer Motorsteuerung ist ein DC/DC-Wandler vorgesehen, dem eine Steuerung zugeordnet ist, die den DC/DC-Wandler an- oder ausschaltet, um die Motorsteuerung in einen Fahr-, Regenerations- oder Generatormodus zu schalten. Die Druckschrift DE 198 46 319 C1 beschreibt eine Energieversorgungsschaltung für ein Kraftfahrzeugbordnetz, das zwei Spannungszweige mit unterschiedlichen Spannungsebenen aufweist. Es ist vorgesehen, dass zur Bereitstellung von Startenergie ein Leistungsstrom von einem ersten Energiespeicher des ersten Spannungszweigs in den zweiten Spannungszweig einspeisbar ist, um in dem zweiten Energiespeicher des zweiten Spannungszweigs einen startfähigen Ladezustand herzustellen

Es ist eine Aufgabe der Erfindung, einen Mechanismus vorzugeben, mit dem der Verbrennungsmotor eines Hybridantriebs bei zu geringer Bordnetzspannung gestartet werden kann.

### Offenbarung der Erfindung

Mittels des erfindungsgemäßen Verfahrens lässt sich der mit einer Starthilfe verbundene Aufwand deutlich verringern, wobei die Erfordernisse an eine externe Starthilfe deutlich verringert werden. Die Starthilfe kann mit dem erfindungsgemäßen Verfahren deutlich preiswerter, leichter und kleiner vorgesehen werden. Gleichzeitig eignen sich, im Gegensatz zu Starthilfen gemäß dem Stand der Technik, Energiespeicher mit geringer Kapazität und Leistung. Darüber hinaus sind die notwendigen Ströme um ein Vielfaches geringer als im Stand der Technik, so dass nahezu jedes beliebige Kabel verwendet werden kann. Ferner ist es durch die geringe Stromstärke nicht notwendig, die Bordnetzbatterie direkt zu kontaktieren. Vielmehr können zahlreiche mit Sicherungen geschützte Bordnetzkontakte verwendet werden, beispielsweise die Zigarettenanzünderbuchse. Im Vergleich zum Stand der Technik sind die Anforderungen an die externe Starthilfe hinsichtlich Versorgungsdauer und Versorgungsleistung deutlich verringert. Mit dem erfindungsgemäßen Verfahren und der erfindungsgemäßen Vorrichtung kann ein Hybridmotor mit einer Starthilfe geschaltet werden, die nur sehr kurz Energie liefert, beispielsweise kürzer als die Versorgungsdauer des Starters beim Startvorgang, und die einen sehr geringen Strom liefert, der deutlich geringer als der Versorgungsstrom des Starters ist.

Es wurde erkannt, dass sich bei Versorgungssystemen gemäß dem Stand der Technik Systemverklemmungen ergeben, so dass trotz vorhandener Energie kein Übertrag (und somit kein Startvorgang) stattfinden kann, da die Funktion des Elements, dass die Übertragung steuert, von dem Zustand des Bordnetzes abhängt. Erfindungsgemäß wird die Systemverklemmung dadurch gelöst, dass die Steuerung des Energieübertrags mittels Hilfsenergie aktiviert wird, wodurch die vorhandene Energie mit geringem Aufwand mobilisiert wird. Im Gegensatz hierzu zielen Verfahren gemäß Stand der Technik nicht auf die Mobilisierung vorhandener Energie ab, sondern führen dem System von außen eine hohe Energiemenge zu, die dem Fehlbetrag entspricht, um so bei schwachem Bordnetz starten zu können. Gemäß dem erfindungsgemäßen Verfahren tritt somit die Energie der Traktionsbatterie an die Stelle einer herkömmlichen externen Starthilfebatterie, wie sie bei herkömmlichen Verfahren verwendet wird.

Während im Stand der Technik die Starthilfe den Zweck hatte, den Energiefehlbetrag, der der Bordnetzbatterie zu einem erfolgreichem Startvorgang fehlt, vollständig zu liefern, liegt der Erfindung das Konzept zu Grunde, eine Selbsthilfekaskade vorzusehen, die durch Aktivierung des Elements mit dem kleinsten Verbrauch gestartet wird. Durch die Aktivierung wird Energie (die der Traktionsbatterie) mobilisiert, die für den Startvorgang verwendet
werden kann. Die für den Startvorgang erforderliche Energie wird erfindungsgemäß nahezu vollständig von der Traktionsbatterie geliefert. Die Erfindung ist daher nicht auf die Energiebereitstellung fokussiert, sondern sieht einen Mechanismus zur Mobilisierung der Energie vor, die in der Traktionsbatterie gespeichert ist. Erfindungsgemäß wird nicht der Startvorgang selbst sondern die Mobilisierung vorhandener Energiereserven unterstützt, wobei erkannt wurde, dass dies sehr wirksam erreicht werden kann, indem weder der Starter, noch die Bordnetzbatterie, noch der DC/DC-Wandler in Betrieb genommen werden muss, sondern lediglich die Wandlersteuerung. Erfindungsgemäß wird durch die Aktivierung der Wandlersteuerung eine Kaskade ausgelöst, die automatisch zur ausreichenden Stromversorgung des Starters führt. Erfindungsgemäß wird daher mit einem geringen Strombetrag nur für eine kurze Zeit die Wandlersteuerung in Betrieb genommen, in dem diese mittels einer externen Energiequelle für eine kurze Dauer mit Strom versorgt wird. Daraufhin wird automatisch der DC/DC-Wandler in Betrieb genommen, der einen hohen Leistungsfluss von der Traktionsbatterie in das Bordnetz hinein die dauerhafte, selbst erhaltende Inbetriebnahme der Wandlersteuerung vorsieht. Die Wandlersteuerung muss daher nur so lange mit Energie versorgt werden, bis der Wandler selbst ausreichend Leistungen von der Traktionsbatterie in das Bordnetz und insbesondere an die Wandlersteuerung liefert. Um die Energiebilanz auszugleichen, wird erfindungsgemäß als weiterer Kaskadenschritt der Verbrennungsmotor gestartet, so dass sowohl Traktionsbatterie als auch Bordnetz bzw. Bordnetzbatterie ihre Energiebilanz ausgleichen können.

Daher sieht das erfindungsgemäße Verfahren vor, die Wandlersteuerung mittels eines externen Hilfsenergiebetrags zu aktivieren, wobei der Hilfsenergiebetrag unter der Energiemenge liegt, die zum Starten zusätzlich aufgebracht werden muss. Die Energie wird nur für eine Zeitdauer bereitgestellt, die der Aktivierung des DC/DC-Wandlers entspricht, und die somit kleiner als die Zeitdauer ist, für die der Starter für einen erfolgreichen Startvorgang mit elektrischer Leistung versorgt werden muss. Bei der Aktivierung der Wandlersteuerung kann diese selbst direkt mit der Hilfsenergie versorgt werden, oder kann über das Bordnetz oder über Teile des Bordnetzes, an die die Wandlersteuerung angeschlossen ist, aktiviert werden.

Vorzugsweise werden nicht alle Lasten, die an dem Bordnetz angeschlossen sind, gleichzeitig mit der Versorgung der Wandlersteuerung mit Strom versorgt. In einer bevorzugten Ausführung wird der Stromfluss derart gesteuert, dass vornehmlich die Wandlersteuerung von der Hilfsenergiequelle elektrische Leistung erhält. Dies kann beispielsweise dadurch vorgesehen werden, dass ein Anschluss für die Hilfsenergiequelle direkt mit der Wandlersteuerung verbunden ist, wohingegen das restliche Bordnetz über
eine Stromlenkungs- oder Stromsteuerungseinrichtung mit der Wandlersteuerung verbunden ist. Beispielsweise kann zwischen der Wandlersteuerung und dem restlichen Bordnetz eine Diode vorgesehen sein, die in Durchlassrichtung von dem Bordnetz zur Wandlersteuerung hin in der Verbindung zwischen Wandlersteuerung und Bordnetz vorgesehen ist. Bei normalem Betrieb, d.h. wenn Bordnetz Nennspannung hat, fließt somit Versorgungsstrom vom Bordnetz an die Wandlersteuerung, wohingegen bei geringer Bordnetzspannung selbst dann kein Strom von der Wandlersteuerung in das Bordnetz hineinfließt, wenn diese direkt Nennspannung erhält. Daher wird das der Erfindung zu Grunde liegende Konzept umgesetzt von einer Versorgungsschaltung für die Wandlersteuerung oder für eine Steuerung, die die Wandlersteuerung umfasst, und die zwar den Stromfluss ausgehend vom Bordnetz zur Wandlersteuerung hin zulässt, jedoch ein Stromfluss von dem Versorgungsanschluss der Wandlersteuerung in das Bordnetz verhindert. Vorzugsweise wird hierzu eine Diode vorgesehen, beispielsweise eine Schottky-Diode.

Wenn eine Wandlersteuerung über eine derartige Verbindung mit dem Bordnetz verbunden ist, so kann gemäß dem erfindungsgemäßen Verfahren eine Hilfstromquelle bzw. Starthilfe-Energiequelle an die Wandlersteuerung angekoppelt werden, ohne dass elektrische Leistung von der Hilfsenergiequelle in das Bordnetz und an andere Lasten fließt. Vielmehr wird dadurch gewährleistet, dass der gesamte Anteil der elektrischen Leistung oder zumindest ein Großteil hiervon, von der Hilfsenergiequelle auch tatsächlich an die Wandlersteuerung fließt. Somit wird die Hilfsenergiequelle geschützt und kann mit einer geringen Kapazität ausgelegt werden. Gleichzeitig wird verhindert, dass die Hilfsenergiequelle mit anderen Lasten als die Wandlersteuerung belastet wird, wodurch die Hilfsenergie wirksam und maßgeblich zur Aktivierung der Wandlersteuerung eingesetzt wird. Hierzu kann ebenso ein Trennschalten verwendet werden, der in einer Notfallsituation mit zu geringer Bordnetzspannung die Lasten bzw. das Bordnetz von der Wandlersteuerung trennt, um zu gewährleisten, dass die Hilfsenergie im Wesentlichen vollständig nur zur Versorgung der Wandlersteuerung verwendet wird. Wenn nach Aktivierung der Wandlersteuerung der DC/DC-Wandler versorgt wird, kann der Trennschalter wieder umgelegt werden, so dass die Wandlersteuerung von dem Bordnetz, dass nun eine ausreichende Spannung aufweist, mit Strom versorgt wird. In gleicher Weise ermöglicht die Diode, dass beim Erreichen einer Nennbetriebsspannung des Bordnetzes die Wandlersteuerung wieder in üblicher Weise vom Bordnetz versorgt wird. Die Zuleitung zwischen einem Anschluss für die Hilfsenergiequelle und der Wandlersteuerung kann für geringe Ströme ausgelegt werden, d.h. für übliche Ströme, die beim Betrieb der Wandlersteuerung auftreten. Insbesondere eignen sich bereits vorgesehene, gesicherte Verbindungen, beispielsweise Verbindungen, mit denen die Zigarettenanzünderbuchse mit dem Bordnetz verbunden ist, da diese zur Versorgung der

Wandlersteuerung ausreichen. Im Gegensatz hierzu sieht der Stand der Technik vor, einen Starterstrom direkt in das Bordnetz einzuspeisen, wobei auf Grund der Höhe des eingespeisten Stroms keine gesicherten Verbindungen verwendet werden können und zumindest die Zigarettenanzünderbuchse auf Grund des hohen Starterstroms hierfür nicht verwendet werden kann.

Die Wandlersteuerung umfasst typischerweise einen Mikroprozessor mit Software oder eine Logikschaltung, die zur Aktivierung des DC/DC-Wandlers eine Stromversorgung von kleiner als 1 A und typischerweise zwischen 1 mA und 100 mA erfordert. Demgemäß ist die erfindungsgemäße Hilfsenergiequelle mit einer Kapazität versehen, die eine Mindestspannung, beispielsweise 10 V, 11 V oder 11,5 V für einen Zeitraum liefert, die die Wandlersteuerung zum Abgeben eines Aktivierungssignals an den DC/DC-Wandlers braucht. Im Falle einer fest verdrahteten Logikschaltung beträgt somit die minimale Versorgungsdauer durch die Hilfsenergiequelle kleiner 1 Sekunde, typischerweise zwischen 5 und 100 Millisekunden. Wird die Wandlersteuerung durch einen Mikroprozessor und entsprechend darauf ablaufender Software vorgesehen, so können ebenfalls ähnliche Werte erreicht werden, wobei es, abhängig vom Initialisierungsvorgang der Wandlersteuerung, erforderlich sein kann, den Betrieb der Wandlersteuerung für mindestens 1 Sekunde, jedoch weniger als 3 Sekunden aufrechtzuerhalten. Versorgt die Hilfsenergiequelle die Wandlersteuerung mit einer Spannung, die jederzeit über einer Minimalbetriebsspannung liegt, d.h. nie unter 10 V, 11 V, oder 11,5 V fallt, so kann dadurch der DC-Wandler aktiviert werden, der das Bordnetz und die Wandlersteuerung versorgt. Vorzugsweise sieht die Hilfsenergiequelle eine Spannung von 12 V bei einer Belastung von 10-100 mA für typischerweise 1, 3, 5 oder 10 Sekunden vor. Aus Kostengründen und zur besseren Handhabung ist jedoch die Hilfsenergiequelle vorzugsweise eingerichtet, die Versorgung für maximal 10 Sekunden, maximal 30 Sekunden, maximal 1 Minute oder maximal 5 Minuten bei einem Strom von 10-100 mA vorzusehen. Die Hilfsenergiequelle kann somit ein Elektrolytkondensator mit hoher Kapazität (größer 0,1 F), ein Goldcap-Kondensator mit entsprechender Kapazität, vorzugsweise eine Reihenschaltung galvanischer Zellen, die wiederaufladbar oder nicht-wiederaufladbar sind, beispielsweise Alkali-Mangan-Batterien, Zink-Luft-Batterien, Lithiumzellen oder ähnliche Primärzellen sein, oder können Sekundärzellen wie Bleiakkumulatoren, Nickelkadmiumakkumulatoren, Nickelmetallhydridakkumulatoren, Lithiumionakkumulatoren oder ähnliche Akkumulatoren sein, die feste oder flüssige Elektrolyte haben können. Insbesondere eignen sich 12-V-Batterien auf Alkali- oder Lithiumbasis mit geringer Kapazität, wie sie beispielsweise für mobile Geräte eingesetzt werden. Die Nennspannung der Reihenschaltung aus galvanischen Zellen beträgt vorzugsweise ca. 12 V, mindestens 12 V oder mindestens 14 V. Ferner kann eine Kombination aus einer Batteriegruppe und einem Aufwärtswandler verwendet werden,
wobei die Batteriegruppe eine geringere Spannung als 12 V liefert, beispielsweise 3,6 V oder 9 V, und der Aufwärtswandler eingerichtet ist, die Batteriespannung in eine Spannung zu verwandeln, mit der die Wandlersteuerung betrieben werden kann, beispielsweise durch Verwendung eines Aufwärtswandlers mit einer geregelten Ausgangsspannung von 10-14 oder ca. 12 V. Das Hilfsstromelement ist vorzugsweise nicht für den Dauerbetrieb ausgelegt, sondern nur für einen kurzen Betrieb von weniger als 1 Minute oder weniger als 10 Sekunden Dauer. Wenn ein Aufwärtswandler verwendet wird, um die Nennspannung der Wandlersteuerung zu erzielen, wird ferner vorzugsweise ein Bedienungselement vorgesehen, um den Wandler nur während des Betriebs mit der Batterie zu verbinden, um eine Entladung durch den Ruhestrom des Aufwärtswandlers zu vermeiden. In einer weiteren Ausführungsform wird anstatt oder in Kombination mit einer Batterie ein Handdynamo verwendet, der geeignet ist, eine Spannung von 12 V vorzusehen, beispielsweise auf Grund der Windungszahl oder auf Grund eines Aufwärtswandlers. Da zur Aktivierung der Wandlersteuerung nur ein geringer Betriebsstrom für kurze Zeit notwendig ist, sind Handgeneratoren, wie sie auch für Mobilfunkgeräte verwendet werden, zum kurzfristigen Betrieb der Wandlersteuerung geeignet. Ferner können Solarzellen verwendet werden, gegebenenfalls in Kombination mit einem Aufwärtswandler, die eine Nennausgangsleistung von 10-100 mA bei 12 V vorsehen. Ferner ist es grundsätzlich möglich, die Stromversorgung eines USB-Anschlusses, beispielsweise eines Laptops zu verwenden, um aus der Betriebsspannung von 5 V mittels eines Aufwärtswandlers eine Spannung von 12 V zu erreichen. Daher kann die erfindungsgemäße Hilfsstromquelle auch mittels eines Adapters vorgesehen werden, der Versorgungsstrom eines USB-Anschlusses auf eine Spannung von 12 V umsetzt, um beispielsweise bei einer Belastung von 50 mA die Wandlersteuerung kurzfristig zu betreiben. Gegebenenfalls können neben dem Aufwärtswandler in der oben genannten Ausführungsform auch Zwischenpufferspeicher vorgesehen werden, die einen Betrieb von beispielsweise weniger als 3 Sekunden kurzfristig unterstützen.

In einer besonders bevorzugten Ausführungsform umfasst die mobile Starthilfe-Energiequelle, die einen Hilfsenergiebetrag bereitstellt, eine Anordnung von 2-8 Zink/Kohle-Batterien, Alkaline-Batterien, Nickelmetallhydrid-Akkumulatoren oder Nickelkadmium-Akkumulatoren, beispielsweise in Form von Mignonzellen, die in Kombination mit einem Aufwärtswandler eine Ausgangsspannung von 12 V bei 20, 50 oder 100 mA bereitstellen. Der Aufwärtswandler kann entfallen, wenn 8 oder mehr Alkaline- oder Zink/Kohle-Batterien verwendet werden, oder wenn 10 oder mehr Nickelmetallhydrid oder Nickelkadmium-Akkumulatoren verwendet werden. Der Aufwärtswandler umfasst vorzugsweise ein Betätigungselement wie einen Schalter, der den Aufwärtswandler vollständig von den Batteriezellen trennt und bei Betätigung mit diesen verbindet.

Der Begriff "Hilfsenergiequelle" ist hier gleichbedeutend zu "Starthilfe-Energiequelle" und bezeichnet einen (externen) Energiespeicher, der einen Hilfsenergiebetrag speichert und an die Wandlersteuerung abgeben kann.

Um die Hilfsenergiequelle bzw. um die Starthilfe-Energiequelle nicht unnötig zu belasten, werden vorzugsweise Lasten des Bordnetzes wie Beleuchtung, Belüftung, Heizung, Servoantrieb, Hi-Fi-Komponente oder ähnliches abgeschaltet, vorzugsweise mittels einer gemeinsam zu betätigenden Schaltungsvorrichtung. Diese Schaltungsvorrichtung kann beispielsweise zwischen der Versorgung der Wandlersteuerung und dem restlichen Bordnetz vorgesehen sein, um das Bordnetz während der Aktivierung der Wandlersteuerung abzuschalten. Alternativ oder in Kombination hierzu wird der Starter, der eine starke Last darstellt, blockiert bzw. nicht aktiviert, um die hierzu unzureichende Hilfsenergiequelle nicht unnötig zu belasten bzw. zu entleeren. Hierzu kann beispielsweise ein Schutzintervall vorgesehen sein, das während des Aktivierungsvorgangs der Wandlersteuerung das Zuführen von Strom an den Starter blockiert, wobei das Schutzintervall ein vorgegebenes Schutzintervall sein kann, das sich nach der üblichen Länge des Aktivierungsvorganges der Wandlersteuerung richtet, oder kann ein Schutzintervall mit variablem Ende sein, das dann endet, wenn erfasst wird, dass das Bordnetz durch den Energieübertrag aus der Traktionsbatterie ausreichend Energie zum Starten bereithält. Vorzugsweise wird hierzu erfasst, ob das Bordnetz bzw. die Bordnetzbatterie ausreichend Energie aufweist, indem ein Batteriestrom erfasst wird oder indem die Spannung erfasst wird, die an dem Akkumulator anliegt. Kriterien zur Beendigung des Schutzintervalls sind daher ein geringer Ladestrom, der auf ein ausreichendes Ladeniveau der Bordnetzbatterie hinweist, und/oder eine Klemmspannung an dem Akkumulator, die eine bestimmte Höhe erreicht, aus der sich ebenfalls auf ein hohes Ladeniveau der Bordnetzbatterie hinweist. Ebenso kann das Schutzintervall beendet werden, wenn erfasst wird, dass der DC/DC-Wandler das Bordnetz ausreichend unterstützt, beispielsweise indem erfasst wird, ob der DC/DC-Wandler ausreichend Strom bzw. eine ausreichende Leistung erzeugt, um das Bordnetz auf eine ausreichende Spannung zu bringen. Insbesondere kann erfasst werden, ob eine Zerhackerschaltung innerhalb des DC/DC-Wandlers eine Wechselspannung erzeugt, wobei dies als Signal gewertet wird, das ausreichend elektrische Leistung für das Bordnetz erzeugt wird, so dass keine weitere Versorgung der Wandlersteuerung durch die Hilfsenergiequelle notwendig ist.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: ein Schaltungsprinzip zum Verbinden der Starthilfe- Energiequelle mit der Wandlersteuerung und dem Bordnetz; und
- Figur 2: einen Wirkungsablauf der Kaskade, die von dem erfindungsgemäßen Verfahren vorgesehen wird.

### Ausführungsformen der Erfindung

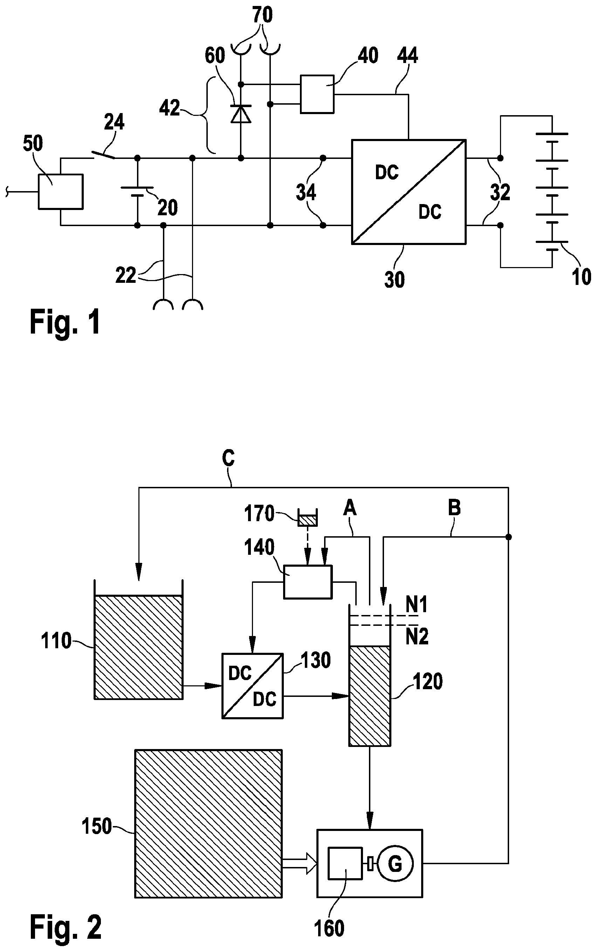

In der Figur 1 ist ein Schaltungsprinzip dargestellt, das zur Beschreibung des erfindungsgemäßen Verfahrens verwendet werden kann. Die Schaltung von Figur 1 umfasst eine Traktionsbatterie 10, eine Bordnetzbatterie 20, einen DC/DC-Wandler 30, der die Traktionsbatterie 10 mit der Bordnetzbatterie 20 verbindet, sowie eine Wandlersteuerung 40, die den DC/DC-Wandler 30 ansteuert. Die Ansteuerung des DC/DC-Wandlers 30 durch die Wandlersteuerung 40 wird über eine Wandlersteuerung-Anschlussleitung 44 vorgesehen. Der Wandler wird ferner über einen Eingang 32 von der Traktionsbatterie 10 mit Spannung versorgt, um diese umzuwandeln und an einem Ausgang 34 des DC/DC-Wandlers 30 auszugeben. Auf diese Weise kann elektrische Energie von der Traktionsbatterie in ein Bordnetz und insbesondere in die Bordnetzbatterie 20 eingespeist werden, die mit dem Bordnetz verbunden ist. Beispielsweise an den Anschlüssen 22 kann sich ein Bordnetz mit den zugehörigen Lasten anschließen. Der Bordnetzanschluss 22 ist parallel zu der Bordnetzbatterie 20 geschaltet, wobei das Bordnetz neben den Lasten wie Beleuchtung, Heizung, Ventilation, weitere Steuerungen, Zündspannungsgenerator und ähnliches auch einen Stromgenerator umfasst, beispielsweise eine Lichtmaschine, um die Bordnetzbatterie 20 in einer Weise aufzuladen, wie sie von verbrennungsmotorgetriebenen Fahrzeugen bekannt ist. Die Bordnetzbatterie 20 ist ferner über einen Schalter 24 mit einem Starter 50 verbunden, der unter Zufuhr eines Starterstroms (typischerweise deutlich mehr als 20 A) ein Drehmoment erzeugt, das direkt an den Verbrennungsmotor übertragen wird und diesen startet. Zwischen dem DC/DC-Wandler 30 und der Bordnetzbatterie 20 kann ferner ein Strombegrenzer oder eine Sicherung vorgesehen sein.

Die Wandlersteuerung 40 wird über eine Verbindungsschaltung 42 von der Bordnetzbatterie 20 mit elektrischer Energie versorgt, um den Betrieb der Steuerung 40 zu gewährleisten. Die Steuerung 40 kann ausschließlich die Funktion haben, den DC/DC-Wandler 30 anzusteuern, wodurch ein minimaler Stromverbrauch erreicht wird. Ferner ist es möglich, dass die Wandlersteuerung 40 Teil einer Steuerung ist, die weitere Funktionen umfasst, beispielsweise Energiemanagement und anderes. Vorzugsweise ist die Funktion der Wandlersteuerung einzeln aktivierbar, um im Falle einer Starthilfe zugeführte Hilfsenergie nicht unnötigerweise an weitere Funktionen abgeben zu müssen. Die Primärfunktion der Wandlersteuerung ist es, den DC/DC-Wandler 30 zu aktivieren, um Energie von der Traktionsbatterie 10 in das Bordnetz und insbesondere in die Batterie 20 zu leiten. Insbesondere ist es Aufgabe der Wandlersteuerung 40, ein Aktivierungssignal an den DC/DC-Wandler 30 zu senden, der daraufhin Energie erzeugt, mit dem sich die Wandlersteuerung 40 selbst mit Energie versorgen kann. Durch diese Selbsterhaltung ist es möglich, Starthilfe mit sehr kleinen Energiebeträgen durchführen zu können, insbesondere mit Energiebeträgen, die im Wesentlichen nur zur Abgabe eines Aktivierungssignals an den DC/DC-Wandler 30 ausreichen. Der darauf eintretende Selbsthaltungseffekt, gespeist aus der Traktionsenergie 10, ermöglicht eine fortdauernde Aktivierung der Schaltung. In einer alternativen Ausführungsform, die nicht in Figur 1 dargestellt ist, übernimmt eine externe Starthilfe die Funktion der Wandlersteuerung 40 und gibt ein Aktivierungssignal direkt in die Leitung 44 ab, so dass das Aktivierungssignal direkt an den DC/DC-Wandler 30 abgegeben wird. Dadurch wird aus der Traktionsbatterie 10 elektrische Energie in das Bordnetz und insbesondere an die Wandlersteuerung 40 abgegeben.

Die Verbindung 42, die den Stromversorgungseingang der Wandlersteuerung 40 mit dem Bordnetz verbindet, umfasst vorzugsweise eine Diode 60, die die Funktion hat, eine externe Energiequelle, die über die Anschlüsse 70 direkt mit dem Versorgungsanschluss mit der Wandlersteuerung 40 verbunden wird, zu schützen. Bei entleerter Bordnetzbatterie 20 und angelegter Hilfsenergie 70 würde sich ohne die Diode 60 ein Stromfluss von der Starthilfe-Energiequelle über den Anschluss 70 in das Bordnetz 22 und die Bordnetzbatterie 20 hinein ergeben. Dadurch wird der Energiefluss an die Wandlersteuerung 40 verringert, so dass die Wandlersteuerung 40 nicht ausreichend Energie erhält, um den DC/DC-Wandler 30 zu aktivieren. In diesem Fall sperrt die Diode 60 den unerwünschten Abfluss von elektrischer Energie ausgehend von der Starthilfequelle 70 zu der Bordnetzbatterie 20 und dem Bordnetz 22. Ferner erfüllt die Diode 60 eine weitere Funktion, nämlich die Aufrechterhaltung der Spannungsversorgung der Wandlersteuerung 40. Falls diese erfolgreich aktiviert wurde, überträgt der DC/DC-Wandler 30 Energie von der Traktionsbatterie 10 an das Bordnetz und insbesondere an die Bordnetzbatterie 20. Daher ergibt sich, beispielsweise an den Anschlüssen 34 des DC/DC-Wandlers 30, eine vorzugsweise geregelte Normspannung, beispielsweise 12 V, die auch von der externen Starthilfe an den Anschlüssen 70 vorgesehen wird. Selbst wenn die angelegte Starthilfe an den Anschlüssen 70 eine geringe Spannung aufweist oder nicht mehr angeschlossen ist, versorgt die Diode 60 in Durchlassrichtung die Wandlersteuerung 40 mit der Spannung, die an dem Ausgang 34 des DC/DC-Wandlers 30 und auch an der Bordnetzbatterie 20 anliegt. In Flussrichtung dient die Diode 60 daher zur Selbsterhaltung der Versorgung der Wandlersteuerung 40.

Falls durch erfolgreiche Aktivierung des DC/DC-Wandlers 30 die Energiebilanz des Bordnetzes und der Bordnetzbatterie 20 ausgeglichen ist, kann der Schalter 24 betätigt werden, der vorzugsweise als Startrelais ausgebildet ist, um den Starter 50 mit Strom zu versorgen. Der Strom kann vollständig von dem DC/DC-Wandler 30 erzeugt sein, zu einem Teil vom DC/DC-Wandler 30 und zu einem Teil von der Bordnetzbatterie 20 oder, nachdem der DC/DC-Wandler 30 die Batterie 20 ausreichend, teilweise oder vollständig aufgeladen hat, im Wesentlichen von der Bordnetzbatterie 20. Um den DC/DC-Wandler 30 nicht dadurch zu überlasten, dass dieser sowohl zum Laden der Bordnetzbatterie 20 als auch zum Liefern des Starterstroms dient, kann ein Schutzzeitintervall vorgesehen sein, das gewährleistet, dass die Bordnetzbatterie 20 einen wesentlichen Anteil des Starterstroms vorsehen kann.

Der Wandler 30 umfasst vorzugsweise eine interne Steuerung bzw. Regelung, die vorzugsweise von der Traktionsbatterie 10 mit Spannung versorgt wird.

Figur 2 zeigt den Wirkungsablauf der Kaskade, die von dem erfindungsgemäßen Verfahren vorgesehen wird. Die Energiemengen bzw. Leistungsbeträge, die relevant für das Verfahren sind, sind als gestrichelte Flächen dargestellt. Die Größe der Fläche entspricht der Menge an Leistung bzw. Energie, die gespeichert ist oder zum Betrieb notwendig ist. Die Größe der Fläche des offenen Rechtecks, indem die schraffierten Flächen untergebracht sind, entspricht der maximalen Kapazität oder dem maximalen Leistungsverbrauch der jeweiligen Komponente. Mit dem Bezugszeichen 170 ist eine mobile Starthilfe dargestellt, die eine relativ geringe Kapazität hat (Fläche des offenen Rechtecks), und in der eine geringe Menge an Energie (schraffierter Bereich) gespeichert ist. Die Starterbatterie 120 soll zunächst unzureichend geladen sein, dargestellt durch einen schraffierten Bereich, der unterhalb von dem Niveau N1 und N2 ist. Das Niveau N1 ist das Spannungsniveau bzw. Energieversorgungsniveau, das zum Betrieb der Startervorrichtung notwendig ist, und das Niveau N2 entspricht dem Spannungsniveau, ab dem eine Steuerung 140 eines DC/DC-Wandlers 130 betrieben werden kann. Obwohl eine Traktionsbatterie 110 ausreichend Energie enthält, kann diese nicht in die Bordnetzbatterie 120 übertragen werden, da der Wandler 130 nicht aktiviert werden kann. Die Hilfsenergie 170 wird nicht zum Füllen eines Energiefehlbetrags in der Bordnetzbatterie 120 verwendet, sondern wird direkt an die Wandlersteuerung 140 geleitet. Dies erfordert einen deutlich geringeren Energiebetrag. Dadurch wird, wie bereits beschrieben, die Wandlersteuerung 140 aktiviert, die wiederum zumindest für einen kurzen Zeitraum den DC/DC-Wandler 130 aktiviert, wodurch Energiefluss von der Traktionsbatterie 110 zur Bordnetzbatterie 120 ermöglicht wird. Dadurch kann der Energiefehlbetrag in der Bordnetzbatterie 120 ausgeglichen werden, wodurch die Niveaus N1 und N2 erreicht werden. Bei Erreichen des Niveaus N2 kann der Energiebedarf der Wandlersteuerung 140 durch das System selbst getragen werden, wodurch die Zuführung von Energie durch eine äußere Starthilfe 170 nicht mehr notwendig ist. Durch die einmalige Aktivierung mittels der externen Energiequelle 170 lässt sich so eine erste Erhaltungsfunktion realisieren, dargestellt durch den Pfeil A. Die Energie der Traktionsbatterie 110 wird so auf die Bordnetzbatterie 120 übertragen, damit diese aufgeladen werden kann, wobei jedoch die Traktionsbatterie auf lange Sicht entladen wird. Um dies zu verhindern, wird eine zweite Selbsterhaltungsstufe in Gang gesetzt, indem dem System Treibstoffenergie 150 zugeführt wird. Der Energiebetrag 150 kann somit den Treibstoff im Tank des Kraftfahrzeugs darstellen. Dieser wird verwendet, um mittels des Verbrennungsmotors und der Lichtmaschine bzw. der E-Maschine Energie zu erzeugen. Hierzu wird Verbrennungsmotor 160 mittels Energie aus der Bordnetzbatterie 120 und/oder aus der Traktionsbatterie 110 (umgewandelt durch den DC/DC-Wandler 130 gestartet, beispielsweise über einen Elektrostarter, so dass die Energiebilanz der Traktionsbatterie 110 und die Energiebilanz der Bordnetzbatterie 120 über die Energiezuführungen B und C ausgeglichen wird.

Nachdem in einer ersten Kaskadenstufe die Hilfsenergiequelle 170 dazu verwendet wurde, um die Traktionsbatterie 110 als Energiequelle für die Bordnetzbatterie 120 und insbesondere für die Wandlersteuerung 140 zu verwenden, besteht eine zweite Kaskadenstufe darin, mit Hilfe der Bordnetzbatterie 120 den Verbrennungsmotor 160 zu starten. Ein erster Selbsterhaltungsmechanismus, der der ersten Kaskadenstufe zugeordnet ist, wird durch den Pfeil A dargestellt, gemäß dem, nach aktiviertem DC/DC-Wandler 130, die Wandlersteuerung 140 mit Energie versorgt werden kann, die von dem DC/DC-Wandler 130 und somit von der Traktionsbatterie 110 stammt. Als zweiter Selbsterhaltungsmechanismus, der der zweiten Kaskadenstufe zugeordnet ist, wird die Energie verwendet, die vom Verbrennungsmotor 160 erzeugt wird, um Traktionsbatterie 110 und/oder Bordnetzbatterie 120 zu versorgen. Insbesondere die Versorgung der Bordnetzbatterie 120 über die Verbindung B ist notwendig, um zu gewährleisten, dass das Bordnetz ausreichend Energie hat, um die Verbrennungsmotorsteuerung und insbesondere die Zündung des Verbrennungsmotors zu gewährleisten. Somit wird gemäß dem zweiten Selbsterhaltungsmechanismus ein Teil der von der Verbrennungsmaschine 160 erzeugten Energie verwendet, um dem Betrieb des Verbrennungsmotors selbst aufrecht zu erhalten.

Obwohl die in Figur 2 dargestellten Flächen und deren Entsprechungen (Energiemenge, Kapazität) nicht maßstäblich sind, lässt sich erkennen, dass mit einer sehr geringen Energie 170 ein Mechanismus ausgelöst werden kann, mit dem ein großer Energiefehlbetrag in der Bordnetzbatterie 120 ausgeglichen werden kann. Es lässt sich daher über die erste und die zweite Kaskadenstufe mit der geringen Energiemenge 170 ein zweistufiger Mechanismus auslösen, an dessen Ende anstatt der Hilfsenergie 170 die gesamte Energie des Treibstofftanks 150 aktiviert und mobilisiert ist. In der ersten Kaskadenstufe wird der DC/DC-Wandler 130 aktiviert, wodurch die Energie der Traktionsbatterie 110 mobilisiert wird, wobei in der zweiten Kaskadenstufe der Verbrennungsmotor 160 aktiviert wird (durch Starten) und somit die Energie des Treibstofftanks 150 mobilisiert wird und dem gesamten System zur Verfügung steht. Die Mobilisierung der jeweiligen Energien (1.: aus der Traktionsbatterie 110, 2.: aus dem Treibstofftank 150) wird auch zur jeweiligen Selbsterhaltung verwendet, d.h. zur Energieversorgung der Komponente (1.: Wandlersteuerung, 2.: Verbrennungsmotor), die mittelbar oder unmittelbar die Mobilisierung der jeweiligen Energie vorsieht.

Gemäß einer Ausführungsform umfasst die erfindungsgemäße Schaltung einen Trennschalter, vorzugsweise einen Hauptschütz, der zwischen Traktionsbatterie und Eingang des DC/DC-Wandlers vorgesehen ist. Insbesondere ist der Hauptschütz gemeinsam mit der Traktionsbatterie in einem Batteriegehäuse angeordnet. Der Hauptschütz ist als Schliesser ausgebildet, der bei Ansteuerung die Traktionsbatterie mit dem Tranktionsbatterieanschluss und somit mit dem restlichen Hochvoltnetz verbindet. Erfindungsgemäß wird der Hauptschütz geschlossen, wenn die Hilfsenergiequelle angeschlossen ist oder angeschlossen wird. Der Hauptschütz wird daher von der Wandlersteuerung direkt oder indirekt (über eine weitere Steuerung) angesteuert, um den DC/DC-Wandler bei dessen Aktivierung mit der Traktionsbatterie zu verbinden.

Als Starter kann ein E-Motor oder ein Starterrelais verwendet werden, der bzw. das nur für diesen Zweck vorgesehen ist. Die Verwendung eines Startermotors neben dem E-Motor des Elektroantriebs (der vorzugsweise ebenso zum Starten des Verbrennungsmotor mit diesem mechanisch verbindbar ist) Führt zu Redundanz und somit zu höherer Verfügbarkeit. Es ergeben sich jedoch Kostenersparnisse, wenn statt eines separaten Starter jedoch der E-Motor des Elektroantriebs des Hybridantriebs zum Starten verwendet, der auch die Traktionsenergie erzeugt, wenn der Hybridantrieb die Traktionsbatterie zur Fortbewegung des Fahrzeugs verwendet. In diesem Fall ist der E-Motor mit dem Verbrennungsmotor verbunden und überträgt ein Startermoment bzw. Rotationsenergie über eine Kupplung und/oder eine Getriebe an den Verbrennungsmotor bzw. an dessen Kurbelwelle. Wenn der E-Motor des Antriebs als Starter verwendet wird, dann genügt es, dass die Wandlersteuerung zunächst nur den Hauptschütz aktiviert, so dass der als Traktions-E-Motor vorgesehene Starter (d.h. der Traktions-Elektromotor) die Energie direkt von der Traktionsbatterie erhält. Darüberhinaus kann zur Versorgung der Elektronik des Verbrennungsmotors (Zündfunkengenerator, Steuerung der Treibstoffzuführung, Zündsteuerung etc.) die u.a. zum Start des Verbrennungsmotor benötigt wird, der DC/DC-Wandler aktiviert werden. In diesem Fall wird in der entsprechenden Kaskade nicht die gesamte Energie zum Starten des Verbrennungsmotors über den DC/DC-Wandler aus der Traktionsbatterie geholt, sondern nur der Teil, der zur Steuerung des Verbrennungsmotors (und weitere Komponenten des 12 V - Bordnetzes) benötigt wird. Der andere Teil zum Erzeugen der Rotationsenergie für den Startvorgang wird direkt aus der Traktionsbatterie gespeist. Die erfindungsgemäße Steuerung umfasst somit nicht nur die Aktivierung des DC/DC-Wandlers, sonder auch die Ansteuerung des E-Motors, damit dieser Energie der Traktionsbatterie direkt in mechanische Rotationsenergie zum Starten des Verbrennungsmotors umwandelt. Die Wandlersteuerung aktiviert in diesem Fall zunächst den Hauptschütz, woraufhin eine Startsteuerung des E-Motors, der Verbrennungsmotor und der DC/DC-Wandler aktiviert wird. Die Wandlersteuerung ist somit vorzugsweise direkt mit dem Hauptschütz oder mit einer Hauptschützsteuerung verbunden. Alternativ kann der Startvorgang durch den E-Motor des Antriebs nach oder mit der Aktivierung des DC/DC-Wandlers durchgeführt werden, um gegebenenfalls eine Startsteuerung mit 12 V- Betriebsspannung zu versorgen. Die Wandlersteuerung kann direkt, über eine Hauptschützsteuerung, oder über eine Steuerleitung, die über den DC/DC-Wandler führt, mit dem Hauptschütz, verbunden sein. Wenn der Startvorgang vom E-Motor durchgeführt wird, der direkt aus der Traktionsbatterie (über den Hauptschütz) gespeist wird, dann kann der DC/DC-Wandler für eine geringere Belastung ausgelegt sein, die im wesentlichen der Belastung durch die Verbrennungsmotorsteuerung entspricht, beispielsweise ca. 200 W oder < 500 W. Erfindungsgemäß betrifft bei der Versorgung der Starters durch die Traktionsbatterie das Starten des Verbrennungsmotors im Normalbetrieb die Versorgung der Steuerung des Verbrennungsmotors mittels aktiviertem DC/DC-Wandler. Ein weiterer Aspekt des Startens ist dann das Erzeugen der Rotationsenergie durch den E-Motor, der direkt von der Traktionsbatterie bespeist wird.

Ferner können neben dem E-Motor auch weitere Komponenten direkt aus der Hochvolt-Traktionsbatterie gespeist werden, bsp. eine Servolenkung oder eine (Klima-)Kompressor. Diese Komponenten können durch die höhere Betriebsspannung für deutlich geringere Ströme ausgelegt werden; dies gilt auch für zugehörige Schalter oder Ansteuerungsschaltungen. Vorzugsweise sind derartige zusätzliche Komponenten zunächst Deaktiviert, bis der Verbrennungsmotor gestartet ist und beispielsweise eine Soll-Drehzahl erreicht hat. Nachdem der Verbrennungsmotor zur Aufrechterhaltung der Energiebilanz beitragen kann (d.h. nach dem Start) sind diese zusätzlichen Komponenten wieder aktivierbar bzw. werden bei Bedarf aktiviert.

In dem obengenannten Fall, in dem der Starter direkt von der Traktionsbatterie versorgt wird, ergäbe sich eine Schaltung, wie sie in Fig. 1 dargestellt ist, bis auf die Beschaltung des Starters, der nicht am 12-Bordnetz angeschlossen ist, sondern an der Traktionsbatterie oder einem anderen Punkt der Hochvoltnetzes, das von der Traktionsbatterie betrieben wird, bsp. der Eingang des DC/DC-Wandlers. Vorzugsweise wäre in diesem Fall zwischen Hochvoltnetz und Starter ein Schaltelement vorgesehen, das von einer Hochvolt-Startersteuerung oder einer anderen Steuerung (bsp. von der Wandlersteuerung) angesteuert wird. Das Schaltelement und/oder die zugehörige Steuerung kann prinzipiell direkt von der Traktionsbatterie versorgt werden, oder von dem DC/DC-Wandler, der in diesem Fall vor dem Startvorgang wie oben beschrieben aktiviert wird. Insbesondere die Definition des Startens in Anspruch 1 betrifft die Versorgung der Verbrennungsmotorsteuerung über den DC/DC-Wandler sowie die Versorgung des Starters über den DC/DC-Wandler oder direkt über die Traktionsbatterie, je nach dem, ob der Starter vom Bordnetz und somit vom DC/DC-Wandler gespeist wird, oder der Starter (und gegebenenfalls eine Startersteuerung) von dem Traktionsbatterienetz gespeist wird.

## Patentansprüche

1. Verfahren zum Starten eines Verbrennungsmotors eines Hybridantriebs mittels einer Hilfsenergiequelle mit den Schritten:
Vorsehen einer E-Maschine und des Verbrennungsmotors, die zusammen zur Erzeugung von Bewegungsenergie in dem Hybridantrieb vorgesehen sind;
Vorsehen einer Traktionsbatterie (10) zur Versorgung der E-Maschine mit Traktionsenergie, einem Bordnetz mit einem Starter zum Starten des Verbrennungsmotors im Normalbetrieb, wobei das Bordnetz von einer Bordnetzbatterie (20) gespeist wird, und einer Wandlersteuerung (40) eines DC/DC-Wandlers (30), der zur Versorgung des Bordnetzes aus der Traktionsbatterie (10) vorgesehen ist, wobei das Bordnetz die Wandlersteuerung versorgt;
**gekennzeichnet durch,**
wenn im Notfallbetrieb aufgrund eines Energiefehlbetrags im Bordnetz die im Bordnetz verbliebene Energie weder für den Betrieb der Wandlersteuerung (40) noch zum Starten des Verbrennungsmotors ausreicht: Zuführen eines externen Hilfsenergiebetrags, der kleiner als der Energiefehlbetrag zum Starten des Verbrennungsmotors ist, zur Wandlersteuerung (40), um den Betrieb der Wandlersteuerung (40) zumindest kurzfristig zu gewährleisten, Aktivieren des DC/DC-Wandlers (30) durch Ansteuerung mittels der Wandlersteuerung (40) und Einspeisen eines von der Traktionsbatterie (10) stammenden Startvorgang-Energiebetrags, der zusammen mit der im Bordnetz verbliebene Energie zum Starten des Verbrennungsmotors ausreicht, in das Bordnetz durch den DC/DC-Wandler (30); wobei das Verfahren ferner umfasst: Starten des Verbrennungsmotors durch Übertragen von Rotationsenergie vom Starter.

2. Verfahren nach Anspruch 1, wobei das Starten umfasst: Starten des Verbrennungsmotors mittels eines Versorgungsstroms einer Bordnetzbatterie (20), die an das Bordnetz angeschlossen ist, und/oder mittels eines vom DC/DC-Wandler (30) erzeugten Stroms, und Versorgen der Wandlersteuerung (40) durch Leiten von Strom von dem DC/DC-Wandler (30) an das Bordnetz, nachdem der externen Hilfsenergiebetrags der Wandlersteuerung (40) zugeführt wurde, wobei der externe Hilfsenergiebetrag direkt oder über das Bordnetz der Wandlersteuerung (40) zugeführt wird.

3. Verfahren nach einem der vorangehenden Ansprüche, wobei während dem Zuführen des externen Hilfsenergiebetrags zumindest eine Last von dem Bordnetz für zumindest ein Schutzzeitintervall abgetrennt ist, das mit dem Zuführen beginnt, wobei die zumindest eine Last umfasst: ein Beleuchtungselement, ein Belüftungselement, ein elektrisches Heizelement, ein elektrischer Servoantrieb, eine elektronische Unterhaltungskomponente, eine durch geringen Ladezustand als Last wirkende Batterie, eine Aufladevorrichtung für eine Batterie oder für eine Bordnetzbatterie (20) oder eine Kombination hiervon.

4. Verfahren nach Anspruch 3, wobei das Starten des Verbrennungsmotors während des Schutzintervalls, am Ende des Schutzintervalls, nach dem Ende des Schutzintervalls oder zu einem Zeitpunkt ausgeführt wird, an dem das Bordnetz eine Energiemenge speichert, die zum erfolgreichen Starten des Verbrennungsmotor ausreicht, oder an dem das Bordnetz eine Energiebilanz aufweist, die zum erfolgreichen Starten des Verbrennungsmotor ausreicht.

5. Verfahren nach Anspruch 4, wobei das Schutzzeitintervall nach einem vorbestimmten Schutzintervall endet oder dann endet, wenn der Strom, der vom DC/DC-Wandler (30) in das Bordnetzes fließt, einen Schwellwert unterschreitet und/oder eine interner Spannung des Bordnetzes einen Schwellwert überschreitet.

6. Verfahren nach einem der vorangehenden Ansprüche, wobei das Gewährleisten des Betriebs der Wandlersteuerung (40) im wesentlichen durch Zuführen externer Hilfsenergie vorgesehen wird, wobei das Zuführen externer Hilfsenergie das Zuführen von elektrischer Leistung umfasst, mit der im wesentlichen nur die Wandlersteuerung (40) zumindest kurzfristig betrieben und/oder eine zum Betrieb der Wandlersteuerung (40) notwendige Bordnetzspannung zumindest kurzfristig erreicht wird, und/oder die zum Starten notwendige Energie im wesentlichen von dem DC/DC-Wandler (30) alleine oder von dem DC/DC-Wandler (30) in Kombination mit dem Bordnetz stammt, wobei die Menge der externen Hilfsenergie und/oder die durch die Hilfsenergie vorgesehene Versorgungsdauer des Bordnetzes einem Bruchteil derjenigen Energiemenge bzw. derjenigen Versorgungsdauer entspricht, die das Starten beansprucht.

7. Notversorgungsschaltung zur Versorgung einer Wandlersteuerung eines Hybridantriebs, wobei die Wandlersteuerung (40) eingerichtet ist, einen DC/DC-Wandler (30) zur Versorgung eines Bordnetzes aus einer Traktionsbatterie (10) des Hybridantriebs zu steuern, wobei die Notversorgungsschaltung einen Anschluss für eine externe Hilfsenergiequelle und eine elektrische Verbindung zu einem Versorgungsanschluss der Wandlersteuerung (40) vorsieht, wobei die elektrische Verbindung für den Strombedarf der Wandlersteuerung (40) ausgelegt ist.

8. Notversorgungsschaltung nach Anspruch 7, die ferner eine Diode (60) und/oder einen Trennschalter umfasst, die bzw. der den Versorgungsanschluss der Wandlersteuerung gerichtet bzw. steuerbar mit weiteren Verbrauchern, mit Teilen des Bordnetzes, dem gesamten Bordnetz verbindet oder einer Bordnetzbatterie (20) verbindet, wobei der Trennschalter einen Umschalter, einen elektronischen Schalter oder ein Relais umfasst und eingerichtet ist, mittels manueller Betätigung oder mittels eines Steuersignal angesteuert zu werden, und die elektrische Verbindung eine direkte Verbindung ist, die mit dem Versorgungsanschluss bei geöffnetem Trennschalter verbunden ist.

## Claims

1. Method for starting an internal combustion engine of a hybrid drive by means of an auxiliary energy source, comprising the steps of:
providing an electrical machine and the internal combustion engine which together are intended to generate kinetic energy in the hybrid drive;
providing a traction battery (10) for supplying traction energy to the electrical machine, an on-board electrical system comprising a starter for starting the internal combustion engine in the normal mode, wherein the on-board electrical system is fed by an on-board electrical system battery (20), and a converter control system (40) of a DC/DC converter (30) which is intended to supply power to the on-board electrical system from the traction battery (10), wherein the on-board electrical system supplies power to the converter control system,
**characterized by**
if, in an emergency mode on account of an energy deficit in the on-board electrical system, the energy remaining in the on-board electrical system is not sufficient either to operate the converter control system (40) or to start the internal combustion engine: supplying an external auxiliary amount of energy to the converter control system (40), this auxiliary amount of energy being lower than the energy deficit for starting the internal combustion engine, in order to at least briefly ensure operation of the converter control system (40), activating the DC/DC converter (30) by actuation by means of the converter control system (40) and feeding an amount of energy for a starting process, which originates from the traction battery (10), to the on-board electrical system by the DC/DC converter (30), this amount of energy, together with the energy remaining in the on-board electrical system, being sufficient to start the internal combustion engine;
wherein the method further comprises: starting the internal combustion engine by transmitting rotational energy from the starter.

2. Method according to Claim 1, wherein starting comprises: starting the internal combustion engine by means of a supply current of an on-board electrical system battery (20) which is connected to the on-board electrical system, and/or by means of a current which is generated by the DC/DC converter (30), and supplying power to the converter control system (40) by conducting current from the DC/DC converter (30) to the on-board electrical system after the external auxiliary amount of energy has been supplied to the converter control system (40), wherein the external auxiliary amount of energy is supplied to the converter control system (40) directly or by means of the on-board electrical system.

3. Method according to either of the preceding claims, wherein, while supplying the external auxiliary amount of energy, at least one load is disconnected from the on-board electrical system for at least one guard time interval which begins when supply begins, wherein the at least one load comprises: a lighting element, a ventilation element, an electrical heating element, an electric servo drive, an electronic entertainment component, a battery which acts as a load owing to a low state of charge, a charging apparatus for a battery or for an on-board electrical system battery (20), or a combination of these.

4. Method according to Claim 3, wherein starting of the internal combustion engine is executed during the guard interval, at the end of the guard interval, after the end of the guard interval or at a time at which the on-board electrical system stores an amount of energy which is sufficient for successfully starting the internal combustion engine, or at which the on-board electrical system exhibits an energy balance which is sufficient for successfully starting the internal combustion engine.

5. Method according to Claim 4, wherein the guard time interval ends after a predetermined guard interval or ends when the current which flows from the DC/DC converter (30) to the on-board electrical system falls below a threshold value and/or an internal voltage of the on-board electrical system exceeds a threshold value.

6. Method according to one of the preceding claims, wherein ensuring operation of the converter control system (40) is provided substantially by supplying external auxiliary energy, wherein supplying external auxiliary energy comprises supplying electrical power with which substantially only the converter control system (40) is at least briefly operated and/or an on-board electrical system voltage which is necessary for operating the converter control system (40) is at least briefly reached, and/or the energy which is necessary for starting originates substantially from the DC/DC converter (30) alone or from the DC/DC converter (30) in combination with the on-board electrical system, wherein the amount of external auxiliary energy and/or the time for which the on-board electrical system is supplied with auxiliary energy correspond/corresponds to a fraction of the amount of energy and, respectively, of the supply time which is taken up by starting.

7. Emergency power supply circuit for supplying power to a converter control system of a hybrid drive, wherein the converter control system (40) is designed to control a DC/DC converter (30) for supplying power to an on-board electrical system from a traction battery (10) of the hybrid drive, wherein the emergency power supply circuit provides a connection for an external auxiliary energy source and an electrical connection to a power supply connection of the converter control system (40), wherein the electrical connection is designed for the power requirement of the converter control system (40).

8. Emergency power supply circuit according to Claim 7, which further comprises a diode (60) and/or an isolating switch which connect/connects the power supply connection of the converter control system in a directed or controllable manner to further consumers, to parts of the on-board electrical system, to the entire on-board electrical system or to an on-board electrical system battery (20), wherein the isolating switch comprises a changeover switch, an electronic switch or a relay and is designed to be actuated by means of manual operation or by means of a control signal, and the electrical connection is a direct connection which is connected to the power supply connection when the isolating switch is opened.

## Revendications

1. Procédé pour démarrer un moteur à combustion interne d'un groupe propulseur hybride au moyen d'une source d'énergie, comprenant les étapes suivantes :
fourniture d'une machine électrique et du moteur à combustion interne qui, ensemble, sont destinés à générer une énergie motrice dans le groupe propulseur hybride ;
fourniture d'une batterie de traction (10) destinée à alimenter la machine électrique avec de l'énergie de traction, d'un réseau de bord comprenant un démarreur servant au démarrage du moteur à combustion interne en fonctionnement normal, le réseau de bord étant alimenté par une batterie de réseau de bord (20), et d'une commande de convertisseur (40) d'un convertisseur CC/CC (30) qui est destiné à l'alimentation du réseau de bord depuis la batterie de traction (10), le réseau de bord alimentant la commande de convertisseur,
**caractérisé par**
dans un mode de fonctionnement de secours en raison d'une quantité d'énergie manquante dans le réseau de bord, lorsque l'énergie restante dans le réseau de bord ne suffit ni pour le fonctionnement de la commande de convertisseur (40), ni pour le démarrage du moteur à combustion interne : acheminement d'une quantité d'énergie auxiliaire externe, laquelle est inférieure à la quantité d'énergie manquante pour le démarrage du moteur à combustion interne, à la commande de convertisseur (40) afin de garantir le fonctionnement de la commande de convertisseur (40) au moins pendant une courte durée, activation du convertisseur CC/CC (30) par pilotage au moyen de la commande de convertisseur (40) et injection dans le réseau de bord par le convertisseur CC/CC (30) d'une quantité d'énergie d'opération de démarrage issue de la batterie de traction (10) qui, en association avec l'énergie restante dans le réseau de bord, est suffisante pour le démarrage du moteur à combustion interne ; le procédé comprenant en outre : démarrage du moteur à combustion interne par transmission d'énergie de rotation du démarreur.

2. Procédé selon la revendication 1, le démarrage comprenant : démarrage du moteur à combustion interne au moyen d'un courant d'alimentation d'une batterie de réseau de bord (20) qui est raccordée au réseau de bord et/ou au moyen d'un courant généré par le convertisseur CC/CC (30), et alimentation de la commande de convertisseur (40) en conduisant le courant du convertisseur CC/CC (30) au réseau de bord, après avoir acheminé la quantité d'énergie externe à la commande de convertisseur (40), la quantité d'énergie externe étant acheminée à la commande de convertisseur (40) directement ou par le biais du réseau de bord.

3. Procédé selon l'une des revendications précédentes, au moins une charge étant déconnectée du réseau de bord pendant l'acheminement de la quantité d'énergie externe pendant au moins un intervalle de temps de protection, lequel commence avec l'acheminement, l'au moins une charge comprenant : un élément d'éclairage, un élément de ventilation, un élément de chauffage électrique, un servomoteur électrique, un composant de divertissement électronique, une batterie faisant office de charge en raison d'un faible état de charge, un dispositif de charge pour une batterie ou pour une batterie de réseau de bord (20) ou une combinaison de ceux-ci.

4. Procédé selon la revendication 3, le démarrage du moteur à combustion interne étant effectué pendant l'intervalle de protection, à la fin de l'intervalle de protection, après la fin de l'intervalle de protection ou à un instant auquel le réseau de bord accumule une quantité d'énergie qui est suffisante pour réussir le démarrage du moteur à combustion interne, ou auquel le réseau de bord présente un bilan énergétique qui est suffisant pour réussir le démarrage du moteur à combustion interne.

5. Procédé selon la revendication 4, l'intervalle de temps de protection se terminant après un intervalle de protection prédéfini ou se terminant lorsque le courant qui s'écoule depuis le convertisseur CC/CC (30) dans le réseau de bord devient inférieur à une valeur de seuil et/ou une tension interne du réseau de bord devient supérieure à une valeur de seuil.

6. Procédé selon l'une des revendications précédentes, la garantie du fonctionnement de la commande de convertisseur (40) étant assurée sensiblement par l'acheminement d'énergie auxiliaire externe, l'acheminement d'énergie auxiliaire externe comprenant l'acheminement de puissance électrique avec laquelle seule la commande de convertisseur (40) peut fonctionner au moins pendant une courte durée et/ou une tension de réseau de bord nécessaire au fonctionnement de la commande de convertisseur (40) est atteinte au moins pendant une courte durée, et/ou l'énergie nécessaire au démarrage est issue sensiblement du convertisseur CC/CC (30) seul ou du convertisseur CC/CC (30) en combinaison avec le réseau de bord, la quantité d'énergie auxiliaire externe et/ou la durée prévue d'alimentation du réseau de bord par l'énergie auxiliaire externe correspondant à une fraction de la quantité d'énergie ou de la durée d'alimentation que sollicite le démarrage.

7. Circuit d'alimentation de secours destiné à alimenter une commande de convertisseur d'un groupe propulseur hybride, la commande de convertisseur (40) étant conçue pour commander un convertisseur CC/CC (30) servant à l'alimentation d'un réseau de bord depuis une batterie de traction (10) du groupe propulseur hybride, le circuit d'alimentation de secours présentant une borne pour une source d'énergie auxiliaire externe et une liaison électrique à une borne d'alimentation de la commande de convertisseur (40), la liaison électrique étant conçue pour la demande de courant de la commande de convertisseur (40).

8. Circuit d'alimentation de secours selon la revendication 7, comportant en outre une diode (60) et/ou un sectionneur qui relie la borne d'alimentation de la commande de convertisseur de manière dirigée ou commandable à des consommateurs supplémentaires, à des parties du réseau de bord, l'ensemble du réseau de bord ou relie une batterie de réseau de bord (20), le sectionneur comportant un inverseur, un commutateur électronique ou un relais et étant conçu pour être excité au moyen d'un actionnement manuel ou d'un signal de commande, et la liaison électrique étant une liaison directe qui est reliée à la borne d'alimentation lorsque le sectionneur est ouvert.
